# EUROPEAN PATENT APPLICATION

(11) **EP 3 470 446 A1**
(43) Date of publication of application: **17.04.2019**
(21) Application number: 17196506.4
(22) Date of filing: 16.10.2017
(51) Int. Cl.: C08G 18/48, C08G 18/50, C08G 18/76, C08K 5/00, C08G 18/18, C08K 5/521, C08G 101/00

(54) **RIGID POLYURETHANE FOAM SYSTEM AND APPLICATION THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a rigid polyurethane foam system, comprising the following components: A) isocyanate reactive components; B) an organic polyisocyanate; C) a flame retardant; D) catalyst package; and E) chemical foaming agent. The rigid polyurethane foam system according to the present invention has good flowability, panel material adhesion and flame retardancy, which makes it very suitable for the manufacture of dis-continuous panels, in particular reefer containers.

## Description

### Technical Field

The present invention belongs to polyurethane field. More specifically, it relates to a rigid polyurethane foam system and the application thereof.

### Background

The polyurethane composite prepared by dis-continuous process typically comprises a shell and polyurethane foam filled therein. Due to a processing method by first fabricating panels and then assembling, the polyurethane composite has a great flexibility, and has been widely applied in the insulation panel field such as container, refrigeration house, portable dwelling, pipeline and thermal insulation panel for air conditioner.

Current polyurethane composite prepared by dis-continuous process is prepared by the following dis-continuous process: placing a prefabricated shell into a mold, then injecting polyurethane resin into the mold, closing the mold, leaving the polyurethane resin foaming to form polyurethane foam before finally demoulding, thus obtaining the polyurethane composite. The polyurethane resin is generally formed through reaction of isocyanate component with polyol component.

In the dis-continuous panel preparation process, the flowability and adhesion of the foam system have always been the technical focus. If the flowability of foam system is poor, there will be defects in the production such as poor foam density distribution of the article, occurance of foam cell deformation and bubbles at the end of foam flow. The adhesive property of the foam system will directly affect the probability of occurrence of bubbles in the foam composite, lifetime of the article etc.

Currently, HCFC141b is typically used as foaming agent in dis-continuous panel preparation process. However, HCFC141b will be phased out gradually due to ODP(Ozone Depletion Potential) and GWP(Greenhouse Warming Potential).

CN101044180A provide a method for preparing rigid polyurethane foam, which mainly aimed at increasing the compatibility of cyclopentane in composite polyether, thereby improving applicability of the foam system. In this application, polyethers having high hydroxyl value and high functionality in combination with polyethers started with TDA or TMP having low hydroxyl value were used in great amount, in order to improve the compatibility of the system with pentane. However, it kept silent on how to tackle with problems such as adhesion and bubbles during the practical use of the foam system.

US5895792A disclosed a method for preparing rigid polyurethane foam using cyclopentane as foaming agent. In this application, polyethers started with aromatic amines in combination with polyethers with high functionality were used, mainly aiming at increasing the thermal degradation temperature of the foam. However, it didn't mention how to enhance flowability and adhesion of a system using foaming agent other than HCFC141b.

Generally, flame retardant plays a role of fire retardation in rigid polyurethane foam. There are literatures reporting the effect of different flame retardants and different fractions thereof on the fire retardation of the foam (Comparison of Different Phosphorus based Flame Retardants in Rigid Polyurethane Foam for the Production of Insulation Materials , Heiko Tebbe, John Sawaya, CPI 2011). However, these literatures do not mention how to enhance adhesion of the foam.

Therefore, from the perspective of industrial practice, there is a need for a rigid polyurethane foam system, which has good flowability and adhesion, thus having better practical production performance. At the same time, the foam system shows a good flame retardancy performance, meeting the requirements of subsequent welding and installment of dis-continuous composite structure.

### Summary of the invention

The technical problem to be solved by the present invention is to provide a rigid polyurethane foam system, which has a good flowability, adhesion and flame retardancy.

The technical problem to be solved by the present invention is solved by the following technical solution:
According to a first aspect of the present invention, there provides a rigid polyurethane foam system, comprising the following components:
   A) isocyanate reactive components, the isocyanate reactive components comprises the following polyether polyols:
      a1) a first polyether polyol: a polyether with a functionality of 2, having a hydroxyl value of <200mg KOH/g, a viscosity at 25°C of <200mPa.s, and the content thereof being 5∼20 parts by weight;
      a2) a second polyether polyol: a polyether with a high functionality and a low hydroxyl value, having a functionality of >4, a hydroxyl value of <400mg KOH/g, a viscosity at 25°C of <15000mPa•s, and the content thereof being 15∼65 parts by weight;
      a3) a third polyether polyol: a polyether with a high functionality and a high hydroxyl value, having a functionality of >4, a hydroxyl value of >400mg KOH/g, a viscosity at 25°C of >15000mPa•s and <25000mPa•s, and the content thereof being 10∼40 parts by weight;
      a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
      The total amount of the polyether polyols is 100 parts by weight;
   B) an organic polyisocyanate, having an isocyanate index of 1.10∼1.40, based on the polyether polyols and water contained in the rigid polyurethane foam system;
   C) flame retardant, comprising a halogen flame retardant and a non-halogen flame retardant, the content thereof being 5∼25 parts by weight, wherein the content of the non-halogen flame retardant represents 5∼40 wt% of the total weight of the flame retardant;
   D) catalyst package, comprising one or more of foaming catalyst, gelling catalyst and trimerization catalyst, the content thereof being 0.80∼2.00 parts by weight; and
   E) chemical foaming agent, the content thereof being 1.00∼3.00 wt%, based on the weight of A) isocyanate reactive components.

According to a second aspect of the present invention, there provides a rigid polyurethane foam, which is obtained by the reaction of the above rigid polyurethane foam system.

According to a third aspect of the present invention, there provides a method for preparing the above rigid polyurethane foam, comprising the following steps:
i) mixing the following components and stirring uniformly to obtain a polyol premix composition:
   A) isocyanate reactive components, the isocyanate reactive components comprises the following polyether polyols:
      a1) a first polyether polyol: a polyether with a functionality of 2, having a hydroxyl value of <200mg KOH/g, a viscosity at 25°C of <200 mPa.s, and the content thereof being 5∼20 parts by weight;
      a2) a second polyether polyol: a polyether with a high functionality and a low hydroxyl value, having a functionality of >4, a hydroxyl value of <400mg KOH/g, a viscosity at 25°C of <15000 mPa•s, and the content thereof being 15∼65 parts by weight;
      a3) a third polyether polyol: a polyether with a high functionality and a high hydroxyl value, having a functionality of >4, a hydroxyl value of >400mg KOH/g, a viscosity at 25°C of >15000 mPa•s and <25000 mPa•s, and the content thereof being 10∼40 parts by weight;
      a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
   The total amount of the polyether polyols is 100 parts by weight;
   C) flame retardant, comprising a halogen flame retardant and a non-halogen flame retardant, the content thereof being 5∼25 parts by weight, wherein the content of the non-halogen flame retardant represents 5∼40 wt% of the total weight of the flame retardant;
   D) catalyst package, comprising one or more of foaming catalyst, gelling catalyst and trimerization catalyst, the content thereof being 0.80∼2.00 parts by weight; and
   E) chemical foaming agent, the content thereof being 1.00∼3.00 wt%, based on the weight of A) isocyanate reactive components;
ii) mixing the following B) organic polyisocyanate with the polyol premix composition to obtain the rigid polyurethane foam system:
   B) an organic polyisocyanate, having an isocyanate index of 1.10∼1.40, based on the polyether polyols and water contained in the polyol premix composition;
iii) reacting the rigid polyurethane foam system to obtain the rigid polyurethane foam.

According to a fourth aspect of the present invention, there provides a polyurethane composite comprising a shell and the above rigid polyurethane foam filled in the shell.

According to a fifth aspect of the present invention, there provides a method for preparing the above polyurethane composite, comprising the following steps:
i) providing a shell with a cavity;
ii) supplying the above rigid polyurethane foam system to the cavity of the shell; and
iii) subjecting the rigid polyurethane foam system to foaming reaction to obtain the polyurethane composite.

The rigid polyurethane foam system according to the present invention has a good flowability and an excellent adhesion with panel materials such as metals (for example iron, aluminum etc.), FRP, PS and ABS. In addition, it is able to meet the flame retardant standard, grade C of GB8410-2006, thus being particularly suitable for the preparation of dis-continuous panels, especially the reefer containers. The rigid polyurethane foam according to the present invention can achieve a core density of 35-70 kg/m³ and a closed cell content of 85-98%.

### Detailed description of the invention

The specific embodiments according to the present invention are described hereinafter.

According to a first aspect of the present invention, there provides a rigid polyurethane foam system, comprising the following components:
A) isocyanate reactive components, the isocyanate reactive components comprises the following polyether polyols:
   a1) a first polyether polyol: a polyether with a functionality of 2, having a hydroxyl value of <200mg KOH/g, a viscosity at 25°C of <200mPa.s, and the content thereof being 5∼20 parts by weight;
   a2) a second polyether polyol: a polyether with a high functionality and a low hydroxyl value, having a functionality of >4, a hydroxyl value of <400mg KOH/g, a viscosity at 25°C of <15000mPa•s, and the content thereof being 15∼65 parts by weight;
   a3) a third polyether polyol: a polyether with a high functionality and a high hydroxyl value, having a functionality of >4, a hydroxyl value of >400mg KOH/g, a viscosity at 25°C of >15000mPa•s and <25000mPa•s, and the content thereof being 10∼40 parts by weight;
   a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
   The total amount of the polyether polyols is 100 parts by weight;
B) an organic polyisocyanate, having an isocyanate index of 1.10∼1.40, based on the polyethers and water contained in the rigid polyurethane foam system;
C) a flame retardant, comprising a halogen flame retardant and a non-halogen flame retardant, the content thereof being 5∼25 parts by weight, wherein the content of the non-halogen flame retardant represents 5∼40 wt% of the total weight of the flame retardant;
D) catalyst package, comprising one or more of foaming catalyst, gelling catalyst and trimerization catalyst, the content thereof being 0.80∼2.00 parts by weight; and
E) chemical foaming agent, 1.00∼3.00 wt%, based on the weight of A) isocyanate reactive components.

When used in the present invention, the "polyether polyol" has a definition well-known by those skilled in the art and can be prepared by known processes, for example, by the reaction of alkylene oxide with initiator in the presence of catalyst.

The first polyether polyol a1) that can be used in the present invention has a functionality of 1.6-2.4, preferably a hydroxyl value of 60-140 mg KOH/g and preferably a content of 5∼15 parts by weight.

When used in the present invention, unless indicated otherwise, the functionality and hydroxyl value refer to average functionality and average hydroxyl value.

Methods for measuring hydroxyl value are well-known by those skilled in the art, as, for example, disclosed in Houben Weyl, Methoden der Organischen Chemie, vol. XIV/2 Makromolekulare Stoffe, p.17, Georg Thieme Verlag; Stuttgart 1963, which is incorporated herein by reference in its entirety.

In some embodiments according to the present invention, the first polyether polyol is selected from the polyether polyols started with 1,2-propanediol and 1,3-propanediol.

In one preferred embodiment, the first polyether polyol is selected from the propylene oxide-based polyether polyols started with 1,2-propanediol.

The content of the second polyether polyol a2): a polyether with a high functionality and a low hydroxyl value that can be used in the present invention preferably represents 30∼50 parts by weight.

The content of the third polyether polyol a3): a polyether with a high functionality and a high hydroxyl value that can be used in the present invention preferably represents 25∼35 parts by weight.

In some embodiments according to the present invention, the third polyether polyol is selected from the polyether polyols started with sucrose or sorbitol.

More preferably, the second and the third polyether polyols are selected from the propylene oxide-based polyether polyols started with sucrose.

In one embodiment according to the present invention, the first polyether polyol, the second polyether polyol and the third polyether polyol are all selected from propylene oxide-based polyether polyols.

Preferably, the fourth polyether polyol a4) that can be used in the present invention is selected from the polyether polyols started with diphenylmethane diamine and/or toluenediamine, having a functionality of 3.6-4.4, a hydroxyl value of 290-370 mg KOH/g and preferably a content of 15-25 parts by weight.

In one embodiment according to the present invention, the fourth polyether polyol is selected from the propylene oxide-based polyether polyols started with diphenylmethane diamine. The isocyanate reactive components comprising the above polyether polyols has a functionality of 3.5-6, preferably of 4.0-5.5, and a hydroxyl value of 280-450 mg KOH/g, preferably of 290-350 mg KOH/g.

The isocyanate reactive components may further comprise polyols selected from polyester polyol, polycarbonate polyol and mixtures thereof, with a content of 0-30 parts by weight.

The polyester polyol is prepared by the reaction of dicarboxylic acid or dicarboxylic acid anhydride with polyol. The dicarboxylic acid is, preferably but not limited to, aliphatic carboxylic acid comprising 2-12 carbon atoms, such as: succinic acid, malonic acid, glutaric acid, adipic acid, octanedioic acid, azelaic acid, sebacic acid, dodecyl carboxylic acid, maleic acid, fumaric acid, phthalic acid, isophthalic acid, terephthalic acid, and mixtures thereof. The dicarboxylic acid anhydride is, preferably but not limited to, phthalic anhydride, tetrachlorophthalic anhydride, maleic anhydride, and mixtures thereof. The polyol is, preferably but not limited to, ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerol, trimethylolpropane, and mixtures thereof. The polyester polyol further includes the polyester polyol prepared from lactone. The polyester polyol that prepared from lactone is preferably but not limited to ε-caprolactone.

The polycarbonate polyol is preferably but not limited to polycarbonate diol. The polycarbonate diol can be prepared by the reaction of diol with dialkyl carbonate or diaryl carbonate with phosgene. The diol is preferably but not limited to 1,2-propanediol, 1,3-propanediol, 1,4-butanediol, 1,5-pentanediol, 1,6-hexanediol, diethylene glycol, trioxane diol, and mixtures thereof. The dialkyl carbonate or diaryl carbonate is preferably but not limited to diphenyl carbonate.

The organic polyisocyanate of component B) comprises organic diisocyanate which may be any aliphatic, cycloaliphatic or aromatic isocyanate known for preparing polyurethane.

The organic polyisocyanate of component B) has an index of 1.10∼1.40, preferably of 1.15∼1.30.

The index of the organic polyisocyanate mentioned in the present specification refers to the isocyanate index which is typically based on the polyether polyol and water contained in the rigid polyurethane foam system or the polyol premix composition. It is to be understood that the raw materials of the organic polyisocyanate are substantially free of water due to the organic polyisocyanate is sensitive to it, and thus the polyether polyol and water contained in the rigid polyurethane foam system is substantially the same as those contained in the polyol premix composition.

As examples of organic diisocyanate, mentions may be made of: 2,2'-diphenylmethane diisocyanate, 2,4-diphenylmethane diisocyanate, 4,4'-diphenylmethane diisocyanate; diphenylmethane diisocyanate homologues with three or more rings (polymeric MDI); hydrogenated diphenylmethane diisocyanate (HMDI), isophorone diisocyanate (IPDI), oligomers of isophorone diisocyanate; 2,4-toluene diisocyanate (2,4-TDI), 2,6-toluene diisocyanate; tetramethylene diisocyanate, oligomers of tetramethylene diisocyanate; hexamethylene diisocyanate (HDI), oligomers of hexamethylene diisocyanate; naphthalene diisocyanate (NDI)

In one embodiment according to the present invention, the organic polyisocyanates include isocyanates based on the diphenylmethane diisocyanate, in particular those comprising polymeric MDI.

The organic polyisocyanate has a functionality of 1.9-3.5, in particular preferably of 2.5-3.3.

The organic polyisocyanate preferably has a viscosity of 100 - 600 mPa·s, in particular preferably of 150-300 mPa·s.

The viscosity described in the present specification is measured according to DIN 53019-1-3 at 25°C.

The content of the organic polyisocyanate may represent 20-60 wt%, relative to the total weight of the rigid polyurethane foam system.

Polyisocyanate prepolymers may also be used as the organic polyisocyanates. These polyisocyanate prepolymers can be obtained by reacting one or more of the above organic polyisocyanates in excess amount with compound having at least two isocyanate reactive groups at a temperature of 30-100°C, for example, and preferably of 80°C.

The content of NCO of the polyisocyanate prepolymer according to the present invention is preferably of 20-33 wt%, in particular preferably of 25-32 wt%.

The flame retardant used in the present invention comprises halogen flame retardant and non-halogen flame retardant.

As the halogen flame retardant that may be used, examples that may be mentioned are: TCPP (tris(2-chloropropyl) phosphate), TCEP(tris(chloroethyl) phosphate) and the like.

As the non-halogen flame retardant that may be used, examples that may be mentioned are: TEP (triethyl phosphate), DMPP(dimethyl propylphosphonate) and the like.

Through massive studies, the inventors found that the composite flame retardant containing a halogen flame retardant and a non-halogen retardant can change foam strength, therefore affecting the adhesive property of the foam.

The gelling catalyst used in the present invention may be the gelling catalyst generally used in the field of rigid polyurethane foam and examples that may be mentioned are dimethyl cyclohexylamine and dimethyl benzylamine.

The trimerization catalyst used in the present invention may be the trimerization catalyst generally used in the field of rigid polyurethane foam and examples that may be mentioned are: methylammonium salts, ethylammonium salts, octyl quaternary ammonium salts, hexahydrotriazine and organic metal bases.

The foaming catalyst used in the present invention may be the foaming catalyst generally used in the field of rigid polyurethane foam and examples that may be mentioned are: pentamethyldiethylene triamine, bis(dimethylamino ethyl)ether, N,N,N',N"-tetramethylethylenediamine, N,N,N',N"-tetramethylbutanediamine and tetramethylhexanediamine.

Those skilled in the art may choose the type of catalyst and adjust the amount thereof depending on the intended use of the rigid polyurethane foam of the present invention and the contents of the isocyanate reactive components and organic isocyanate component in the formulation.

The chemical foaming agent that may be used in the present invention may be selected from various chemical foaming agents generally used in the field of rigid polyurethane foam, such as water.

The content of the chemical foaming agent is 1.00∼3.00 wt%, preferably 1.30∼2.50 wt%, based on the weight of A) isocyanate reactive components.

The rigid polyurethane foaming system according to the present invention may further comprise physical foaming agent in an amount of 8-25 parts by weight, based on 100 parts by weight of polyether polyol.

The physical foaming agent that may be used in the present invention may be selected from various physical foaming agents generally used in the field of rigid polyurethane foam, preferably but not limited to, halogenated hydrocarbons (such as chlorodifluoromethane, dichlorofluoromethane, dichlorofluoromethane, trichlorofluoromethane, fluorodichloroethane, pentafluorobutane, pentafluoropropane, chlorotrifluoropropylene, hexafluorobutene), hydrocarbon compounds (such as butane, pentane, cyclopentane, hexane, cyclohexane, heptane), gases (such as air, carbon dioxide, nitrogen). The content of the physical foaming agent is 8∼25 parts by weight, preferably 9∼20 parts by weight, based on that the weight of the isocyanate reactive components is 100 parts by weight.

The components that may be used to prepare the polyurethane foam according to the present invention may further comprise other adjuvants or additives generally used in the art, such as surfactants and the like.

The surfactants are preferably but not limited to oxyethylenated derivatives of silicones. The surfactants are used in an amount of 0.01-5 wt% relative to the total amount of all the polyols present in the reaction system for preparing polyurethane, which comprise not only the polyols used as reactive components, but also the polyols used as chain extender and polyols used in other components.

The core density of the polyurethane foam according to the present invention can reach 35-70 kg/m³.

The closed cell ratio of the polyurethane foam according to the present invention can reach 85-98%.

Among the components can be used to prepare the polyurethane foam according to the present invention, the isocyanate reactive components A) has good compatibility with physical foaming agent components such as cyclopentane, thereby a foam with uniform distribution can be obtained. Meanwhile, the rigid polyurethane foam thus prepared also has good demoulding performance and good surface quality.

According to the second aspect of the present invention, there provides a rigid polyurethane foam, which is obtained by the reaction of the rigid polyurethane foam system.

According to a third aspect of the present invention, there provides a method for preparing the above rigid polyurethane foam, comprising the following steps:
i) mixing the following components and stirring uniformly to obtain a polyol premix composition:
   A) isocyanate reactive components, the isocyanate reactive components comprises the following polyether polyols:
      a1) a first polyether polyol: a polyether with a functionality of 2, having a hydroxyl value of <200mg KOH/g, a viscosity at 25°C of <200 mPa.s, and the content thereof being 5∼20 parts by weight;
      a2) a second polyether polyol: a polyether with a high functionality and a low hydroxyl value, having a functionality of >4, a hydroxyl value of <400mg KOH/g, a viscosity at 25°C of <15000 mPa•s, and the content thereof being 15∼65 parts by weight;
      a3) a third polyether polyol: a polyether with a high functionality and a high hydroxyl value, having a functionality of >4, a hydroxyl value of >400mg KOH/g, a viscosity at 25°C of >15000 mPa•s and <25000 mPa•s, and the content thereof being 10∼40 parts by weight;
      a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
      the total amount of the polyether polyols is 100 parts by weight;
   C) flame retardant, comprising a halogen flame retardant and a non-halogen flame retardant, the content thereof being 5∼25 parts by weight, wherein the content of the non-halogen flame retardant represents 5∼40 wt% of the total weight of the flame retardant;
   D) catalyst package, comprising one or more of foaming catalyst, gelling catalyst and trimerization catalyst, the content thereof being 0.80∼2.00 parts by weight; and
   E) chemical foaming agent, the content thereof being 1.00∼3.00 wt%, based on the weight of A) isocyanate reactive components;
ii) mixing the following B) organic polyisocyanate with the polyol premix composition to obtain the rigid polyurethane foam system:
   B) an organic polyisocyanate, having an isocyanate index of 1.10∼1.40, based on the polyethers and water contained in the polyol premix composition;
iii) reacting the rigid polyurethane foam system to obtain the rigid polyurethane foam.

The types and amounts of the above components are the same as described above regarding the rigid polyurethane foam system.

The reaction of the rigid polyurethane foam system is typically carried out in an environment of 0-50°C, preferably of 25-40°C.

According to a fourth aspect of the present invention, there provides a polyurethane composite comprising a shell and the above rigid polyurethane foam filled in the shell.

The shell can be made of the panel material selected from metals, plastics and composite panels.

The polyurethane composite can be selected from the group consisting of: roof panel, side panel, base panel or door panel of containers; roof panel, side panel, base panel or door panel of portable dwelling; roof panel, side panel, base panel or door panel of refrigeration house; thermal insulation panel of air conditioner; and thermal insulation pipeline.

According to a fifth aspect of the present invention, there provides a method for preparing the above polyurethane composite, comprising the following steps:
i) providing a shell with a cavity;
ii) supplying the above rigid polyurethane foam system to the cavity of the shell; and
iii) subjecting the rigid polyurethane foam system to foaming reaction to obtain the polyurethane composite.

Generally, the temperature of the shell is maintained at 28∼40°C, and the temperature of the raw materials of the rigid polyurethane foam system is maintained at 18∼25°C. The method for preparing the polyurethane composite in the present invention is a dis-continuous method.

In some embodiments according to the present invention, the cavity has a shape of plate and hollow cylinder.

In some embodiments according to the present invention, panel material such as metal, plastic and composite panel is firstly employed to be prefabricated into a shell, then the joint parts of the shell are subjected to sealing treatment, while reserving feeding hole and exhaust hole, and finally, the shell is placed into a mold for foaming and moulding, the above rigid polyurethane foam system is injected into the cavity of the shell through the feeding hole of the mold and the shell, and the polyurethane composite can be obtained after the completion of foaming reaction of the rigid polyurethane foam system and the article that well foamed is taken out.

Unless indicated otherwise, all the technical and scientific terms used herein have the same meanings as those commonly understood by those skilled in the field that the present invention belongs to. In the case that the definition of a term in the specification conflicts with that commonly understood by those skilled in the field that the present invention belongs to, the definition described herein controls.

The present invention is illustrated hereafter by reference to examples. It is, however, to be understood that the scope of the present invention is not limited by these examples.

### Examples

### Description of raw materials used in Examples:

Polyether with a functionality of 2:
   GR210: a polyether polyol, purchased from Shanghai Gaoqiao Petrochemical Co., Ltd, hydroxyl value: 100, viscosity: 160 mPa•s, functionality: 2.0;
Polyether with a high functionality and a low hydroxyl value:
   Desmophen 4030M: a polyether polyol, purchased from Covestro Polymer Co., Ltd, hydroxyl value: 380, viscosity: 11250 mPa•s, functionality: 5.8;
   GR8231: a polyether polyol, purchased from Shanghai Gaoqiao Petrochemical Co., Ltd, hydroxyl value: 310, viscosity: 1200 mPa•s, functionality: 4.3;
Polyol with a high functionality and a high hydroxyl value:
   NJ4502: a polyether polyol, purchased from Jurong Ningwu New Material Co. Ltd, hydroxyl value: 450, viscosity: 17000 mPa•s, functionality: 5.2;
   NJ6207: a polyether polyol, purchased from Jurong Ningwu New Material Co. Ltd, hydroxyl value: 460, viscosity: 16000 mPa•s, functionality: 5.3;
Aromatic amine starting polyether:
   Z450: a polyether polyol, purchased from Covestro Taiwan Co. Ltd, hydroxyl value: 345, viscosity: 12000 mPa•s, functionality: 4.0;
Flame Retardants:
   TCPP: a halogen flame retardant, purchased from Jiangsu Yoke Technology Co., Ltd;
   TEP: a non-halogen flame retardant, purchased from Jiangsu Yoke Technology Co., Ltd;
Surfactants:
   L6920: purchased from Momentive Performance Materials (China) Co., Ltd;
Foaming Agents:
   Cyclopentane: purchased from Guangzhou Meilong Company;
   HFC 245fa: purchased from Honeywell Company;
   LBA: purchased from Honeywell Company;
Catalysts:
   Dabco Polycat 41 (abbreviated as pc 41): a polyurethane trimerization catalyst, purchased from Air Products and Chemicals (China) Co., Ltd;
   Dabco polycat 8 (abbreviated as pc 8): a polyurethane gelling catalyst, purchased from Air Products and Chemicals (China) Co., Ltd;
   Dabco polycat 5 (abbreviated as pc 5): a polyurethane foaming agent, purchased from Air Products and Chemicals (China) Co., Ltd;
Organic Polyisocyanates:
   Desomdur® 44v20L: NCO content: 31.5 wt%, purchased from Covestro Polymer (China) Co., Ltd.

### Description of test methods used in Examples:

Flowability test: the flowability of the foam system was tested with HSR flow tube during the test; the higher of the final height, the better of the flowability of the system.

Adhesive test: a steel plate (50*50mm) spray coated with epoxy paint was adhered to a mold, left to foam and cut along the edges after foaming and moulding. The bonding strength of the foam and the panel material was measured in accordance with GB9641.
Compressive strength test: measured in accordance with GB8813.
Thermal conductivity test: measured in accordance with GB3399.
Flame performance test: measured in accordance with GB8410.

### Examples 1- 7 and Comparative Examples 1-7

The polyol blend components were mixed in accordance with the formulation shown in Tables 1-3 by a premixing device, then the polyol blend components were mixed with physical foaming agents by a high pressure premixing machine, and finally subjected to closed mold mixing and casting with organic polyisocyanate (Desmodur 44V20L) by a high pressure machine, and the mold was opened to take out the dis-continuous article that well foamed and molded after a demoulding time (about 30 mins).

Before injection, a shell is firstly prefabricated employing steel plate to form a cavity with a shape of plate, then the joint parts of the shell are subjected to sealing treatment, while reserving feeding hole and exhaust hole, and finally, the shell is placed into a mold for foaming and moulding, the rigid polyurethane foam system is applied into the cavity of the shell through the feeding hole of the mold and the shell, and the dis-continuous article can be obtained after the completion of foaming reaction of the rigid polyurethane foam system and the article that well foamed is taken out from the mold.

**Table 1**

| | | | Unit | Comparative Example 1 | Example 1 | Example 2 | Example 3 |
|---|---|---|---|---|---|---|---|
| Polyol Blend | polyol with a functionality of 2 | GR210 | pbw | 10 | 10 | 10 | 10 |
| | polyol with a high functionality and a low hydroxyl value | DESMOPHEN 4030M | pbw | 70 | 15 | 15 | 15 |
| | polyol with a high functionality and a high hydroxyl value | NJ4502 | pbw | | 30 | | 30 |
| | polyol with a high functionality and a low hydroxyl value | GR8231 | pbw | | 25 | 25 | 25 |
| | polyol with a high functionality and a high hydroxyl value | NJ 6207 | pbw | | | 30 | |
| | Aromatic Amine Starting Polyether | Z450 | pbw | 20 | 20 | 20 | 20 |
| | Surfactant | L6920 | pbw | 2.5 | 2.5 | 2.5 | 2.5 |
| | flame retardant (halogen) | TCPP | pbw | 9 | 9 | 9 | 9 |
| | flame retardant (non-halogen) | TEP | pbw | 3 | 3 | 3 | 3 |
| | Foaming Catalyst | PC5 | pbw | 0.1 | | | |
| | Gelling Catalyst | PC8 | pbw | 0.37 | 0.37 | 0.37 | 0.53 |
| | Trimerization Catalyst | PC41 | pbw | 0.35 | 0.65 | 0.65 | 0.65 |
| | Chemical Foaming Agent | Water | (% weight, relative to isocyanate reactive components) | 1.98 | 2.01 | 1.99 | 1.47 |
| Mixing Ratio | Polyol Blend | | g | 100 | 100 | 100 | 100 |
| | Physical Foaming Agent | Cyclopentane | g | 11.5 | 11.5 | 11.5 | 14 |
| | Isocyanate | 44v201 | g | 134 | 134 | 134 | 134 |
| Reactivity and Flowability Tests | Stirring Time | | sec | 10 | 10 | 10 | 10 |
| | Rise Time | | sec | 23 | 32 | 32 | 34 |
| | Gelling Time | | sec | 190 | 189 | 188 | 193 |
| | Tack-free Time | | sec | 340 | 332 | 327 | 307 |
| | Core Density | | kg/m³ | 27.5 | 27.8 | 27.4 | 27.7 |
| | Gel Height hG(cm) | | cm | 90 | 91 | 91 | 87 |
| | Final Height hE(cm) | | cm | 93 | 94 | 94 | 91 |
| Foam | Core Density | | kg/m³ | 41.0 | 40.9 | 40.7 | 40.3 |
| | ┴, Compressive Strength | | Kpa | 167.9 | 168.1 | 162.9 | 158.4 |
| | ┴, Compressive Strength | | Kpa | 203.4 | 214.2 | 207.8 | 196.6 |
| Physical Properties Tests | | | | | | | |
| | //, Compressive Strength | | Kpa | 266.4 | 255.9 | 250.5 | 249.8 |
| | Bonding Strength | | kPa | 212.6 | 225.5 | 227.3 | 234.6 |
| | Thermal Conductivity, 10 °C | | mW/m*K | 22.01 | 22.03 | 22.22 | 22.12 |

It can be seen from the above Table 1 that, the foam system of Example 1 performs best in flowability, adhesive property, foam strength and heat-conducting property.

**Table 2**

| | | | Unit | Comparative Example 2 | Example 4 | Comparative Example 3 | Comparative Example 4 | Comparative Example 5 |
|---|---|---|---|---|---|---|---|---|
| polyol blend | polyol with a functionality of 2 | GR210 | pbw | 10 | 10 | 10 | 10 | 10 |
| | polyol of a high functionality and a low hydroxyl value | DESMOPHEN 4030M | pbw | 15 | 15 | 15 | 15 | 15 |
| | polyol of a high functionality and a high hydroxyl value | NJ4502 | pbw | 30 | 30 | 30 | 30 | 30 |
| | polyol of a high functionality and a low hydroxyl value | GR8231 | pbw | 25 | 25 | 25 | 25 | 25 |
| | Aromatic Amine Starting Polyether | Z450 | pbw | 20 | 20 | 20 | 20 | 20 |
| | Surfactant | L6920 | pbw | 2.5 | 2.5 | 2.5 | 2.5 | 2.5 |
| | Flame Retardant (halogen) | TCPP | pbw | 12 | 9 | 6 | 3 | |
| | Flame Retardant (non-halogen) | TEP | pbw | | 3 | 6 | 9 | 12 |
| | Gelling Catalyst | PC8 | pbw | 0.37 | 0.37 | 0.37 | 0.37 | 0.37 |
| | Trimerization Catalyst | PC41 | pbw | 0.65 | 0.65 | 0.65 | 0.65 | 0.65 |
| | Chemical Foaming Agent | Water | (%weight, relative to isocyanate reactive components) | 2.01 | 2.03 | 1.98 | 2.02 | 1.99 |
| Mixing Ratio | Polyol Blend | | g | 100 | 100 | 100 | 100 | 100 |
| | Physical Foaming Agent | Cyclopentane | g | 11.5 | 11.5 | 11.5 | 11.5 | 11.5 |
| | Isocyanate | 44v201 | g | 134 | 134 | 134 | 134 | 134 |
| Reactivity and Flowability Tests | Stirring Time | | sec | 10 | 10 | 10 | 10 | 10 |
| | Rise Time | | sec | 32 | 31 | 31 | 31 | 30 |
| | Gelling Time | | sec | 189 | 184 | 183 | 182 | 177 |
| | Tack-free Time | | sec | 332 | 320 | 320 | 327 | 337 |
| | Core Density | | kg/m³ | 27.8 | 27.8 | 27.5 | 27.5 | 27.2 |
| | Gel Height hG(cm) | | cm | 91 | 90 | 91 | 90 | 91 |
| | Final Height hE(cm) | | cm | 94 | 93 | 94 | 94 | 93 |
| Foam Physical Properties Tests | Core Density | | kg/m³ | 40.9 | 40.4 | 40.4 | 40.5 | 40.6 |
| | ┴, Compressive Strength | | Kpa | 168.1 | 167.2 | 161.4 | 158.5 | 148.9 |
| | ┴, Compressive Strength | | Kpa | 214.2 | 210.2 | 206.2 | 197.2 | 195.4 |
| | //, Compressive Strength | | Kpa | 255.9 | 254.9 | 244.9 | 241.3 | 237.7 |
| | Bonding Strength | | kPa | 218.5 | 226.1 | 225.3 | 213.8 | 206.1 |
| | Thermal Conductivity, 10 °C | | mW/m*K | 22.03 | 22.08 | 22.14 | 22.12 | 22.08 |
| Flame Retardant Test | GB8410 | | Class | C | C | B | B | B |

It can be seen from Table 2 that, among different selections and ratios of flame retardants, the formulation of Example 4 performs best in the adhesive property of the foam system and other comprehensive properties.

**Table 3**

| | | | Unit | Comparative Example 6 | Example 5 | Example 6 | Example 7 | Comparative Example 7 |
|---|---|---|---|---|---|---|---|---|
| Polyol Blend | polyol with a functionality of 2 | GR210 | pbw | 10 | 10 | 10 | 10 | 10 |
| | polyol of a high functionality and a low hydroxyl value | DESMOPHEN 4030M | pbw | 15 | 15 | 15 | 15 | 70 |
| | polyol of a high functionality and a high hydroxyl value | NJ4502 | pbw | 30 | 30 | 30 | 30 | |
| | polyol of a high functionality and a low hydroxyl value | GR8231 | pbw | 25 | 25 | 25 | 25 | |
| | Aromatic Amine Starting Polyether | Z450 | pbw | 20 | 20 | 20 | 20 | 20 |
| | Surfactant | L6920 | pbw | 2.5 | 2.5 | 2.5 | 2.5 | 2.5 |
| | flame retardant(halogen) | TCPP | pbw | 12 | 9 | 9 | 9 | 12 |
| | flame retardant(non-halogen) | TEP | pbw | | 3 | 3 | 3 | |
| | Gelling Catalyst | PC8 | pbw | 0.37 | 0.37 | 0.37 | 0.37 | 0.37 |
| | Trimerization Catalyst | PC41 | pbw | 0.65 | 0.65 | 0.65 | 0.65 | 0.65 |
| | Chemical Foaming Agent | Water | (%weight, relative to isocyanate reactive components) | 2.01 | 1.98 | 2.01 | 2.02 | 2.01 |
| Mixing Ratio | Polyol Blend | | g | 100 | 100 | 100 | 100 | 100 |
| | Physical Foaming Agent | Cyclopentane | g | 11.5 | 11.5 | | | |
| | | HFC 245fa | | | | 20.5 | | 20.5 |
| | | LBA | | | | | 21 | |
| | Isocyanate | 44v201 | g | 134 | 134 | 134 | 134 | 134 |
| Reactivity and Flowability Tests | Stirring Time | | sec | 10 | 10 | 10 | 10 | 10 |
| | Rise Time | | sec | 32 | 31 | 24 | 29 | 23 |
| | Gelling Time | | sec | 189 | 184 | 205 | 182 | 207 |
| | Tack-free Time | | sec | 332 | 320 | 360 | 327 | 372 |
| | Core Density | | kg/m³ | 27.8 | 27.8 | 27.9 | 27.5 | 28.1 |
| | Gel Height hG(cm) | | cm | 91 | 90 | 95 | 93 | 95 |
| | Final Height hE(cm) | | cm | 94 | 93 | 98 | 96 | 97 |
| Foam Physical Properties Tests | Core Density | | kg/m³ | 40.9 | 40.4 | 42.7 | 41.1 | 41.9 |
| | ┴, Compressive Strength | | Kpa | 168.1 | 167.2 | 181.4 | 177.2 | 186.9 |
| | ┴, Compressive Strength | | Kpa | 214.2 | 210.2 | 226.1 | 225.1 | 229.5 |
| | //, Compressive Strength | | Kpa | 255.9 | 254.9 | 244.9 | 240.3 | 248.7 |
| | Bonding Strength | | kPa | 218.5 | 226.1 | 192.3 | 233.8 | 180.1 |
| | Thermal Conductivity, 10 °C | | mW/m*K | 22.03 | 22.08 | 22.18 | 21.12 | 22.11 |
| Flame Retardant Test | GB8410 | | Class | C | C | A | A | A |

It can be seen from Table 3 that, the rigid polyurethane foam system according to the present invention is excellent in the foam adhesive property.

Through comparison among different foaming agents, it can be seen that among different foaming agent systems, halogen flame retardant used in combination with non-halogen flame retardant can effectively increase the bonding strength of the foam system.

Although the present invention has been described in detail regarding the objectives thereof hereinbefore, it is to be understood that this detailed description is merely illustrative. In addition to those defined in the claims, those skilled in the art could make various modifications without departing from the principal and spirit of the present invention.

## Claims

1. A rigid polyurethane foam system, **characterized in that**, comprising the following components:
A) isocyanate reactive components, the isocyanate reactive components comprises the following polyether polyols:
a1) a first polyether polyol: a polyether with a functionality of 2, having a hydroxyl value of <200mg KOH/g, a viscosity at 25°C of <200mPa.s, and the content thereof being 5∼20 parts by weight;
a2) a second polyether polyol: a polyether with a high functionality and a low hydroxyl value, having a functionality of >4, a hydroxyl value of <400mg KOH/g, a viscosity at 25°C of <15000mPa•s, and the content thereof being 15∼65 parts by weight;
a3) a third polyether polyol: a polyether with a high functionality and a high hydroxyl value, having a functionality of >4, a hydroxyl value of >400mg KOH/g, a viscosity at 25°C of >15000mPa•s and <25000mPa•s, and the content thereof being 10∼40 parts by weight;
a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
The total amount of the polyether polyols is 100 parts by weight;
B) an organic polyisocyanate, having an isocyanate index of 1.10∼1.40, based on the polyether polyols and water contained in the rigid polyurethane foam system;
C) a flame retardant, comprising a halogen flame retardant and a non-halogen flame retardant, the content thereof being 5∼25 parts by weight, wherein the content of the non-halogen flame retardant represents 5∼50 wt% of the total weight of the flame retardant;
D) catalyst package, comprising one or more of foaming catalyst, gelling catalyst and trimerization catalyst, the content thereof being 0.80∼2.00 parts by weight; and
E) chemical foaming agent, the content thereof being 1.00∼3.00 wt%, based on the weight of A) isocyanate reactive components.

2. The rigid polyurethane foam system according to claim 1, **characterized in that**, the organic polyisocyanate is one or more components chosen from the group consisting of: 2,2'-diphenylmethane diisocyanate, 2,4-diphenylmethane diisocyanate, 4,4'-diphenylmethane diisocyanate; diphenylmethane diisocyanate homologues with three or more rings (polymeric MDI); hydrogenated diphenylmethane diisocyanate (HMDI), isophorone diisocyanate (IPDI), oligomers of isophorone diisocyanate; 2,4-toluene diisocyanate (2,4-TDI), 2,6-toluene diisocyanate; tetramethylene diisocyanate, oligomers of tetramethylene diisocyanate; hexamethylene diisocyanate (HDI), oligomers of hexamethylene diisocyanate; naphthalene diisocyanate (NDI); and a compound resulted from the organic polyisocyanates mentioned above with compounds with at least two isocyanate reactive groups.

3. The rigid polyurethane foam system according to claim 1 or 2, **characterized in that**, the first polyether polyol, the second polyether polyol and the third polyether polyol are all selected from propylene oxide-based polyether polyol.

4. The rigid polyurethane foam system according to claim 1 or 2, **characterized in that**, the isocyanate reactive components further comprises one or more polyols selected from polyester polyols, polycarbonate polyols and mixtures thereof.

5. A rigid polyurethane foam, **characterized in that**, it is obtained by the reaction of the rigid polyurethane foam system according to any one of claims 1-4.

6. A method for preparing the rigid polyurethane foam according to claim 5, **characterized in that**, comprising the following steps:
i) mixing the following components and stirring uniformly to obtain a polyol premix composition:
A) isocyanate reactive components, the isocyanate reactive components comprises the following polyether polyols:
a1) a first polyether polyol: a polyether with a functionality of 2, having a hydroxyl value of <200mg KOH/g, a viscosity at 25°C of <200 mPa.s, and the content thereof being 5∼20 parts by weight;
a2) a second polyether polyol: a polyether with a high functionality and a low hydroxyl value, having a functionality of >4, a hydroxyl value of <400mg KOH/g, a viscosity at 25°C of <15000 mPa•s, and the content thereof being 15∼65 parts by weight;
a3) a third polyether polyol: a polyether with a high functionality and a high hydroxyl value, having a functionality of >4, a hydroxyl value of >400mg KOH/g, a viscosity at 25°C of >15000 mPa•s and <25000 mPa•s, and the content thereof being 10∼40 parts by weight;
a4) a fourth polyether polyol: aromatic amine starting polyether, having a functionality of <4.5, a hydroxyl value of <400mg KOH/g, a viscosity at 25°C of <30000 mPa•s, and the content thereof being 10∼35 parts by weight;
the total amount of the polyether polyols is 100 parts by weight;
C) a flame retardant, comprising a halogen flame retardant and a non-halogen flame retardant, the content thereof being 5∼25 parts by weight, wherein the content of the non-halogen flame retardant represents 5∼40 wt% of the total weight of the flame retardant;
D) catalyst package, comprising one or more of foaming catalyst, gelling catalyst and trimerization catalyst, the content thereof being 0.80∼2.00 parts by weight; and
E) chemical foaming agent, the content thereof being 1.00∼3.00 wt%, based on the weight of A) isocyanate reactive components;
ii) mixing the following B) organic polyisocyanate with the polyol premix composition to obtain the rigid polyurethane foam system:
B) an organic polyisocyanate, having an isocyanate index of 1.10∼1.40, based on the polyether polyols and water contained in the polyol premix composition;
iii) reacting the rigid polyurethane foam system to obtain the rigid polyurethane foam.

7. A polyurethane composite, **characterized in that**, comprising a shell and the rigid polyurethane foam according to claim 5 filled in the shell.

8. The polyurethane composite according to claim 7, **characterized in that**, the shell is made of the panel material selected from metals, plastics and composite panels.

9. The polyurethane composite according to claim 7, **characterized in that**, the polyurethane composite is selected from the group consisting of: roof panel, side panel, base panel or door panel of containers; roof panel, side panel, base panel or door panel of portable dwelling; roof panel, side panel, base panel or door panel of refrigeration house; thermal insulation panel of air conditioner; and thermal insulation pipeline.

10. A method for preparing the polyurethane composite according to any one of claims 7-9, **characterized in that**, comprising the following steps:
i) providing a shell with a cavity;
ii) supplying the rigid polyurethane foam system according to any one of claims 1-4 to the cavity of the shell; and
iii) subjecting the rigid polyurethane foam system to foaming reaction to obtain the polyurethane composite.
